# EUROPEAN PATENT APPLICATION

(11) **EP 4 757 372 A1**
(43) Date of publication of application: **10.06.2026**
(21) Application number: 25221164.4
(22) Date of filing: 05.12.2025
(51) Int. Cl.: H04W 12/06

(54) **A METHOD OF ENABLING A BASE STATION TO DETERMINE A WIRELESS TRANSMISSION FINGERPRINT OF AN AMBIENT IOT DEVICE, A METHOD OF REGISTERING ONE OR MORE AUTHORISED AMBIENT IOT DEVICES WITH A BASE STATION, A BASE STATION, AN AMBIENT IOT DEVICE, A SYSTEM AND A COMPUTER PROGRAM**

(30) Priority: 06.12.2024 GB 202417946
(71) Applicant: Vodafone Group Services Limited, Newbury RG14 2FN (GB)
(72) Inventor: BOUKLEY HASAN, Wael, London, W2 6BY (GB)
(74) Representative: Boult Wade Tennant LLP

(57) **Abstract**

A method of enabling a base station to determine a wireless transmission fingerprint of an Ambient Internet-of-Things, Ambient loT, device is provided. The method comprises communicating, from the Ambient loT device to the base station, a request for the Ambient loT device to register with the base station. The method further comprises communicating, from the base station to the Ambient loT device, instructions for the Ambient loT device to transmit a wireless communication signal to the base station. The method further comprises communicating a wireless communication signal from the Ambient loT device to the base station, in accordance with the instructions, wherein the wireless communication signal characterises a wireless transmission fingerprint of the Ambient loT device.

## Description

### Field of the invention

The present disclosure relates to security of Ambient loT devices. In particular, the disclosure relates to determining wireless transmission fingerprints of Ambient loT devices to register and authenticate authorised devices.

### Glossary

loT - Internet of Things
RF - Radio Frequency
RFID - Radio Frequency Identification
Al - Artificial Intelligence
ML - Machine Learning
TR - Technical Report
UE - User Equipment
BS - Base Station
ABS - Advanced Base Station
BTS - Base Transceiver Station
BSS - Basic Service Set
ESS - Extended Service Set
AP - Access Point
NB - Node B (Radio Base Station Receiver)
eNB - Evolved Node B
gNB - Next-Generation Node B
TRP - Transmission and Reception Point
PS - Processing Server
TE - Terminal Equipment
MS - Mobile Station
MT - Mobile Terminal
UT - User Terminal
SS - Subscriber Station
PDA - Personal Digital Assistant
CDMA - Code Division Multiple Access
FDMA - Frequency Division Multiple Access
TDMA - Time Division Multiple Access
OFDMA - Orthogonal Frequency Division Multiple Access
SC-FDMA - Single Carrier Frequency Division Multiple Access
MC-FDMA - Multicarrier Frequency Division Multiple Access
UTRA - Universal Terrestrial Radio Access
GSM - Global System for Mobile Communications
GPRS - General Packet Radio Service
EDGE - Enhanced Data Rates for GSM Evolution
IEEE - Institute of Electrical and Electronics Engineers
E-UTRA - Evolved UTRA
UMTS - Universal Mobile Telecommunications System
E-UMTS - Evolved UMTS
3GPP - 3rd Generation Partnership Project
DL - Downlink
UL - Uplink
LTE - Long Term Evolution (4G)
LTE-A - LTE-Advanced
NR - New Radio (5G)
FDD - Frequency Division Duplex
TDD - Time Division Duplex
CRS - Cell-specific Reference Signal
CSI-RS - Channel State Information Reference Signal
FPGA - Field-Programmable-Gate-Array
ASIC - Application-Specific-Integrated-Circuit
DSP - Digital-Signal-Processor
CD-ROM - Compact Disc Read-Only Memory
DVD-ROM - Digital Versatile Disc Read-Only Memory
ROM - Read-Only Memory
RAM - Random-Access Memory
EEPROM - Electrically Erasable Programmable Read-Only Memory
EPROM - Erasable Programmable Read-Only Memory

### Background

Standard wireless loT devices are powered by batteries that need to be manually replaced or recharged via a wired connection. New technology has led to the development of "Ambient" IoT devices, which either have no energy storage capability (no battery) or have energy storage capabilities but do not require manual intervention to replenish depleted energy storage (e.g., recharge or replace the battery). The complexity and power consumption of Ambient IoT devices is considerably lower than existing (battery powered) 3GPP IoT devices. Therefore, Ambient loT devices are low-maintenance and are suitable for large deployments where it would be infeasible to maintain large numbers of individual devices. Moreover, large numbers of Ambient IoT devices may be simultaneously connected to a base station and a density of connected Ambient loT devices may be considerably higher than existing 3GPP IoT devices.

One example use case of Ambient IoT devices is asset identification in a commercial environment. At present, asset identification is typically undertaken via printed barcodes or short-range RFID tags. These are simple and inexpensive to produce and are also small and lightweight. However, the range of these devices is short (e.g., around 1 metre) and can only be read by manually scanning the barcode or RFID tag with a handheld device. Scanning these devices may require manual intervention from human warehouse managers and may also be time consuming. Moreover, a manual scanning system means that operators can identify a tagged item that they are inspecting or find when a specific item was last scanned but they cannot automatically locate a specific tagged item.

RFID portals may be set up to automatically scan RFID devices passing through the portal. However, such systems exhibit some of the same problems as standard RFID (i.e., items are only scanned when they pass through the portals and are not otherwise contactable). Moreover, interference between RFID tags and readers can lead to unreliable scanning, especially when large numbers of tags are passing through the portal.

To improve upon the prior art, Ambient IoT devices may be used in place of standard barcodes or RFID tags. These devices may be contactable without requiring manually scanning.

### Summary

A method of enabling a base station to determine a wireless transmission fingerprint of an Ambient Internet-of-Things, Ambient IoT, device is provided. The method comprises communicating, from the Ambient loT device to the base station, a request for the Ambient loT device to register with the base station. The method further comprises communicating, from the base station to the Ambient IoT device, instructions for the Ambient loT device to transmit a wireless communication signal to the base station. The method further comprises communicating a wireless communication signal from the Ambient loT device to the base station, in accordance with the instructions, wherein the wireless communication signal characterises a wireless transmission fingerprint of the Ambient loT device.

The method may be performed by the base station or the Ambient loT device.

By defining a specific training period, during which the Ambient loT device transmits a signal according to a set of instructions provided by the base station, the fingerprint may be learned quickly and accurately. This may improve the quality of the stored data and improve the performance of the subsequent device authentication.

This represents an improvement over scenarios in which the base station attempts to learn the fingerprint from standard communication with the Ambient loT device, during which the device may only be transmitting for short periods (and so the fingerprint may be harder to learn).

The instructions may comprise instructions for the Ambient loT device to transmit a wireless communication signal continuously during a window of time (a training window). The window of time may be defined in the instructions.

The instructions may comprise radio resource allocation instructions.

Advantageously, by allocating specific resources to the Ambient loT device, the base station can reduce the any interference of the wireless communication signal. For example, the base station could leave neighbouring resources (in time or in frequency) unallocated, in order to reduce interference. Moreover, if it is known to the base station that certain resources (e.g., frequency bands) are subject to interference, the base station may avoid these resources in the instructions. Thus, by reducing interference affecting the wireless communication signal, the base station may learn the fingerprint of the Ambient loT device more quickly and accurately. The interference on these radio resources may be acceptable for normal communications but it may be preferred to avoid them when the base station is determining the fingerprint.

The radio resource allocation instructions may comprise one or more of:
timing allocation instructions;
frequency channel allocation instructions; and
spreading sequence allocation instructions.

If there are only a few new devices to register, the base station may allocate a portion of the available resources (e.g., bandwidth) to devices that are already registered and another portion of the available resources to training new devices. Whereas, if there are a relatively large number of devices to register, the base station may send instructions to other (already registered) devices to instruct them not to transmit during the training window (so that the base station can dedicate resources to training the new devices). Accordingly, the one or more Ambient loT devices may comprise a plurality of devices.

The wireless transmission fingerprint may be unique to the Ambient loT device.

The wireless transmission fingerprint may depend on the inherent hardware imperfections of transmitting devices, such as variations in signal frequency, phase noise, or power levels. Therefore, since these imperfections are unique to each device, the wireless transmission fingerprint may also be unique to each device.

The wireless transmission fingerprint may also be referred to as a Radio Frequency (RF) fingerprint.

The wireless transmission fingerprint may depend on electrical characteristics of hardware of the Ambient IoT device and/or characteristics of a wireless communications channel between the Ambient loT device and the base station.

The wireless communications signal may be communicated between the Ambient loT device and the base station via one or more repeaters and/or relays.

The method may be performed by an Ambient loT device.

The Ambient loT device may comprise one or more sensors (e.g., location sensor, temperature sensor, light sensor, and the like).

The Ambient loT device may be a tag, which is associated with a unique tag identifier. The tag may be used to track an item to which it is attached, such as a box within a warehouse.

In other examples, Ambient IoT devices may be used to monitor products and equipment in a factory. For example, the devices may be used to report on the status and/or quality or products and equipment (e.g., could be affixed to bottles in a factory).

The Ambient loT device may be a passive Ambient loT device (i.e., a device that does not require a wired external power supply).

A range of the Ambient loT device may be greater than 10 metres. In some examples, the range may be up to 100 metres.

One or more of the passive Ambient loT devices may comprise one or more rechargeable batteries (and some others of the passive Ambient loT devices may comprise no batteries).

The Ambient loT device may have no sim card (so the usual security measures may not be possible).

The method may be performed by a base station.

The base station may be a 3GPP 5G base station (gNodeB).

The method may further comprise determining a wireless transmission fingerprint of the Ambient IoT device, based on the wireless communication signal communicated from the Ambient IoT device to the base station. The method may further comprise storing the wireless transmission fingerprint in a list of wireless transmission fingerprints of authorised (registered) Ambient loT devices.

The method may be a method of determining a wireless transmission fingerprint of an Ambient Internet-of-Things, Ambient IoT, device.

The stored list of wireless transmission fingerprints of authorised Ambient IoT devices may be used during an authentication mechanism between the base station and a candidate Ambient IoT device requesting access to a network associated with the base station.

The indication may comprise a wireless communication identifier of the Ambient IoT device.

The wireless transmission fingerprint may be stored in association with a wireless communication identifier of the Ambient IoT device.

The wireless communication identifier may comprise:
a Network Identifier; and
an Operator Allocated Identifier.

The wireless communication identifier may be unique to the Ambient loT device.

The wireless communication identifier may be unique at least among authorised Ambient loT devices. An unauthorised Ambient loT device may attempt to gain access to the network by spoofing the wireless communication identifier of the authorised Ambient loT device.

The Ambient loT device may be one of a plurality of Ambient IoT devices from which a request to register with the base station is received by the base station.

The method may further comprise communicating, from the base station to one or more authorised Ambient IoT devices, radio resource allocation instructions for the authorised Ambient loT devices to transmit wireless communication signals to the base station during the window of time. The radio resource allocation instructions sent to the one or more authorised Ambient IoT devices may cause the one or more authorised Ambient loT devices to communicate with the base station via a limited subset of available radio resources. The limited subset of radio resources may exclude radio resources allocated to the plurality of Ambient IoT devices.

The radio resource allocation instructions may comprise one or more of:
timing allocation instructions;
frequency channel allocation instructions; and
spreading sequence allocation instructions.)

The method may further comprise communicating, from the base station to one or more authorised Ambient loT devices, instructions for the authorised Ambient IoT devices to cease transmission of wireless communication signals to the base station during the window of time.

The method may further comprise receiving an indication that one or more authorised Ambient loT devices will request to register with the base station during a window of time. A start of the window of time may be defined by the indication. The indication may be received via a physical interface in a secure location and in communication with the base station via a secure connection. The method may further comprise determining that the request was received from the Ambient loT device the during the window of time.

Details of the physical interface and indication are described in further detail below. Features described in relation to other examples are also relevant to these examples.

Determining a wireless transmission fingerprint of the Ambient IoT device may comprise processing the wireless communication signal using a model (e.g., an artificial intelligence / machine learning, AI/ML model).

AI/ML techniques or other suitable techniques may include deep learning, reinforced or unreinforced machine learning, neural networks, K-means clustering, regression analysis, and/or other suitable techniques, analyses, computations, or the like.

The stored list of wireless transmission fingerprints of authorised Ambient IoT devices may be used during an authentication procedure between the base station and a candidate Ambient IoT device requesting access to a network associated with the base station. The authentication procedure is described in further detail below and these details are also relevant to these examples.

Likewise, if the request for an the Ambient IoT device to register with the base station comes from an unauthorised device, the base station may deny access to a network associated with the base station, as described in reference to other examples below, details of which are also relevant to these examples.

A base station configured to perform the methods described above is also provided.

An Ambient loT device configured to perform the methods described above is also provided.

A system configured to perform the methods described above is also provided.

The system may comprise a base station and/or one or more Ambient loT devices.

The system may further comprise a physical interface in a secure location and in communication with the base station via a secure connection. The physical interface may be configured to send an indication to the base station that one or more authorised Ambient loT devices will request to register with the base station during a window of time, wherein a start of the window of time is defined by the indication. The base station may be configured to receive requests for the one or more Ambient loT devices to register with the base station and determine that the requests were received during the window of time.

A computer program comprising instructions that, when executed on a processor, cause the processor to perform the methods described above is also provided.

A method of registering one or more authorised Ambient Internet-of-Things, Ambient loT, devices with a base station is also provided. The method comprises receiving, at the base station, an indication that one or more authorised Ambient loT devices will request to register with the base station during a window of time. A start of the window of time is defined by the indication. The indication is received via a physical interface in a secure location and in communication with the base station via a secure connection. The method further comprises, for each of the one or more authorised Ambient IoT devices:
receiving, from the authorised Ambient IoT device, a request for the authorised Ambient loT device to register with the base station;
determining that the request was received during the window of time;
receiving a wireless communication signal from the authorised Ambient IoT device;
determining a wireless transmission fingerprint of the authorised Ambient loT device, based on the wireless communication signal received from the authorised Ambient loT device; and
storing the wireless transmission fingerprint in a list of wireless transmission fingerprints of authorised (registered) Ambient IoT devices.

The list of wireless transmission fingerprints of authorised Ambient IoT devices may be a list of fingerprints of authorised Ambient loT devices that have successfully registered with the base station.

The method may be performed by the base station.

A "list" may be any suitable data structure for storing a plurality of fingerprints (e.g., depending on the nomenclature being used, this may be referred to as a "list", an "array" or a "vector"). The order of the list may be unimportant so the list may be an unordered list.

The window of time during which devices may register may be relatively narrow compared to the remainder of time when devices are not permitted to register. Therefore, it is highly unlikely that an unauthorised device with no knowledge of indication (and so no knowledge of when the window will occur) would happen to register during the window.

The wireless transmission fingerprint may be unique to the Ambient loT device.

The wireless transmission fingerprint may depend on the inherent hardware imperfections of transmitting devices, such as variations in signal frequency, phase noise, or power levels. Therefore, since these imperfections are unique to each device, the wireless transmission fingerprint may also be unique to each device.

The wireless transmission fingerprint may also be referred to as a Radio Frequency (RF) fingerprint.

The wireless transmission fingerprint may depend on electrical characteristics of hardware of the Ambient IoT device and/or characteristics of a wireless communications channel between the Ambient loT device and the base station.

The wireless communications signal may be communicated between the Ambient loT devices and the base station via one or more repeaters and/or relays.

The physical interface may comprise a button or switch and/or a digital interface.

The indication may be sent from the physical interface to the base station in response to an authorised user manually interacting with the physical interface.

In some examples, the physical interface may be a button, and the user may manually interact with the interface by pressing the button. In other examples, the physical interface may comprise a plurality of buttons in the form of a keypad and the user may manually interact with the interface by pressing a sequence of buttons. In yet further examples, the physical interface may be a digital interface, such as a computer terminal, touchscreen interface or electronic key reader.

The indication may be received at an instant in time. The start of the window of time may be defined by the instant in time at which the indication is received.

After manually interacting with the physical interface, the authorised user may then activate the one or more authorised Ambient loT devices within the window of time. Therefore, the window of time may start when the authorised user provides the manual interaction with the physical interface, or shortly after.

The window of time may have a predetermined duration.

In some examples, where the physical interface is a button, pressing and releasing the button may initiate the window of time having the predetermined duration.

Alternatively, a duration of the window of time may be provided with the indication (as part of the indication or alongside it). For example, the authorised user may specify a duration of the window of time. This may be useful for the authorised user to adjust the window of time based on how many Ambient loT devices they are intending to connect. If there are only a few devices, the window can be relatively short. Whereas, if there are a relatively large number of devices, the window may need to be longer, to provide the authorised user with sufficient time to manually activate all of the devices. Accordingly, the one or more Ambient IoT devices may comprise a plurality of devices.

In further examples, the physical interface may comprise a switch and the user may manually interact with the interface by toggling the switch from an inactive position to an active position. An end of the window of time may be defined by the user toggling the switch from the active position to the inactive position at a later instant in time.

In still further examples, where the physical interface comprises a button, an end of the window of time may be defined by the user releasing the button at a later instant in time. In other words, the user may need to hold the button while activating the authorised Ambient loT devices.

The secure location of the manual interface may be physically located at a site of the base station.

Each authorised Ambient loT device may be located within a service area (e.g., a private industrial environment). The secure location of the physical interface is located within the service area.

The base station may be located within the service area.

Alternatively, the base station may be located outside of the service area.

One or more of the Ambient IoT devices may comprise one or more sensors (e.g., location sensor, temperature sensor, light sensor, and the like).

The Ambient loT devices may be tags, each of which is associated with a unique tag identifier. The tags may be used to track items to which they are attached, such as boxes within a warehouse.

Each Ambient IoT device may be a passive Ambient IoT device (i.e. a device that does not require a wired connection to an external power supply).

Some of the passive Ambient IoT devices have batteries and some do not. During operation, the batteries may be charged passively, rather than by a wired connection to an external power supply.

The Ambient loT device may have no SIM (so the usual security measures for loT devices based on SIM security are not possible for Ambient IoT devices without SIMs).

Determining a wireless transmission fingerprint of the Ambient IoT device may comprise processing the wireless communication signal using a model (e.g., an artificial intelligence / machine learning, AI/ML model).

AI/ML techniques or other suitable techniques may include deep learning, reinforced or unreinforced machine learning, neural networks, K-means clustering, regression analysis, and/or other suitable techniques, analyses, computations, or the like.

The wireless communication signal and/or the request for the authorised Ambient loT device to register with the base station may comprise a wireless communication identifier of the authorised Ambient IoT device. The wireless transmission fingerprint may be stored in association with the wireless communication identifier of the authorised Ambient loT device.

The wireless communication identifier may comprise:
a Network Identifier; and
an Operator Allocated Identifier.

The wireless communication identifier may be unique to the authorised Ambient IoT device.

The wireless communication identifier may be unique at least among authorised Ambient loT devices. An unauthorised Ambient loT device may attempt to gain access to the network by spoofing the wireless communication identifier of the authorised Ambient loT device.

The method may further comprise receiving a request for an unauthorised Ambient loT device to register with the base station. The method may further comprise determining that the request was received outside of a window of time defined by an indication received via the physical interface. The method may further comprise denying access to a network associated with the base station.

Denying access to the network may comprise not sending instructions for the Ambient loT device to transmit a wireless communication signal to the base station.

Denying access to the network may comprise refusing to register the unauthorised Ambient loT device.

Denying access to the network may comprise raising an alarm to an operator of the base station.

Denying access to the network may comprise barring the unauthorised Ambient IoT device by storing a wireless communication identifier of the unauthorised Ambient loT device in a list of identifiers of unauthorised Ambient loT devices. The request for the unauthorised Ambient IoT device to register with the base station may comprise the wireless communication identifier of the unauthorised Ambient IoT device.

The stored list of wireless transmission fingerprints of authorised Ambient IoT devices may be used during an authentication procedure between the base station and a candidate Ambient IoT device requesting access to a network associated with the base station. The authentication procedure may comprise (for each transmission session of an Ambient loT device):
receiving a wireless communication signal from the candidate Ambient loT device (e.g., during initiation of a new communication session);
determining a wireless transmission fingerprint of the candidate Ambient loT device;
comparing the wireless transmission fingerprint of the candidate Ambient IoT device to one or more wireless transmission fingerprints stored in the list of wireless transmission fingerprints of authorised Ambient IoT devices (if the device is authorised/registered, the fingerprint would have been stored during registration of the candidate Ambient loT device); and
if the wireless transmission fingerprint of the candidate Ambient loT device (obtained during session initiation) matches a wireless transmission fingerprint stored in the list of wireless transmission fingerprints of authorised Ambient IoT devices (this means that the candidate device is the same device that was registered as authorised), determining that the candidate Ambient loT device is an authorised Ambient loT device and permitting access to the network by establishing a communication session with the authorised Ambient loT device.

The wireless communication signal received from the candidate Ambient IoT device may comprise a wireless communication identifier of the candidate Ambient loT device. Comparing the wireless transmission fingerprint of the candidate Ambient loT device to one or more wireless transmission fingerprints stored in the list of wireless transmission fingerprints of authorised Ambient IoT devices may comprise comparing the wireless transmission fingerprint of the candidate Ambient IoT device to a wireless transmission fingerprint stored in association with the wireless communication identifier of the candidate Ambient loT device in the list of wireless transmission fingerprints of authorised Ambient loT devices.

The authentication procedure may further comprise, if the wireless transmission fingerprint of the candidate Ambient IoT device (obtained during session initiation) does not match any of the wireless transmission fingerprints stored in the list of wireless transmission fingerprints of authorised Ambient IoT devices, determining that the candidate Ambient loT device is an unauthorised Ambient IoT device and denying access to the network by refusing to establish a communication session with the unauthorised Ambient loT device.

The wireless communication signal may comprise a wireless communication identifier of the candidate Ambient loT device. The authentication procedure may further comprise, if there is no wireless transmission fingerprint stored in association with the wireless communication identifier of the candidate Ambient loT device in the list of wireless transmission fingerprints of authorised Ambient IoT device and/or if the wireless transmission fingerprint of the candidate Ambient IoT device does not match a wireless transmission fingerprint stored in association with the wireless communication identifier of the candidate Ambient IoT device in the list of wireless transmission fingerprints of authorised Ambient loT devices, determining that the candidate Ambient loT device is an unauthorised Ambient loT device and denying access to the network by refusing to establish a communication session with the unauthorised Ambient loT device.

The authentication procedure may further comprise barring the unauthorised Ambient loT device by storing the wireless transmission fingerprint of the unauthorised Ambient loT device in a list of wireless transmission fingerprints of unauthorised Ambient loT devices (a blocklist).

The wireless communication signal may comprise a wireless communication identifier of the unauthorised Ambient IoT device. The authentication procedure may further comprise barring the unauthorised Ambient IoT device by storing the wireless communication identifier of the unauthorised Ambient IoT device in a list of identifiers of unauthorised Ambient loT devices.

The authentication procedure may further comprise comparing the wireless transmission fingerprint (obtained during session initiation) to a stored list of wireless transmission fingerprints of unauthorised Ambient loT devices (blocklist). The authentication procedure may further comprise if the wireless transmission fingerprint of the candidate Ambient IoT device (obtained during session initiation) matches a wireless transmission fingerprint from the stored list of wireless transmission fingerprints of unauthorised Ambient loT devices, determining that the candidate Ambient loT device is an unauthorised Ambient loT device and denying access to the network by refusing to establish a communication session with the unauthorised Ambient loT device.

The wireless communication signal may comprise a wireless communication identifier of the candidate Ambient IoT device. If the wireless communication identifier of the candidate Ambient IoT device is in a list of identifiers of unauthorised Ambient IoT devices, the authentication procedure may further comprise determining that the candidate Ambient loT device is an unauthorised Ambient IoT device and denying access to the network by refusing to establish a communication session with the unauthorised Ambient loT device.

Where an unauthorised Ambient IoT device is transmitting a signal within range of the base station (e.g., in the service area), the authentication procedure may further comprise: the raising an alarm to an operator of the base station. This can cause the operator to look for the unauthorised device and remove it from the service area.

The method may further comprise sending, from the base station to the authorised Ambient loT device, instructions for the authorised Ambient loT device to transmit the wireless communication signal to the base station, wherein the wireless communication signal received from the authorised Ambient IoT device is in accordance with the instructions.

A system for registering one or more authorised ambient Internet-of-Things, Ambient loT, devices with a base station is also provided. The system comprises a base station configured to receive an indication that one or more authorised Ambient IoT devices will request to register with the base station during a window of time. A start of the window of time is defined by the indication. The indication is received via a physical interface in a secure location and in communication with the base station via a secure connection. The base station is further configured to receive requests for the one or more authorised Ambient loT devices to register with the base station. The base station is further configured to determine that the requests were received during the window of time. The base station is further configured to receive wireless communication signals from the one or more authorised Ambient loT devices. For each of the authorised Ambient loT devices, the base station is further configured to determine a wireless transmission fingerprint of the authorised Ambient loT device, based on the wireless communication signal received from the authorised Ambient IoT device. The base station is further configured to store each wireless transmission fingerprint in a list of wireless transmission fingerprints of authorised (registered) Ambient loT devices.

The system may further comprise a physical interface in a secure location and in communication with the base station via a secure connection. The physical interface may be configured to send the indication to the base station that one or more authorised Ambient loT devices will request to register with the base station during a window of time.

The indication may be sent in response to a manual interaction between the physical interface and an authorised user.

The system may further comprise a data store. The list of wireless transmission fingerprints may be stored in the data store. The data store may be a database. The base station may comprise the data store or the data store may be separate from the base station.

A computer program is also provided. The computer program comprises instructions that, when executed on a processor, cause the processor to perform any of the methods described above.

### Detailed description

The 3GPP group are working on supporting Ambient loT systems in Release 19 (and it is envisaged that Ambient loT support will be maintained in ongoing 5G releases and in 6G). In Release 18, a study item was performed in 3GPP TR 38.848, which is herein incorporated by reference. Ambient loT should provide services based on 3GPP interfaces similar to those provided by RFID. One difference between RFID and Ambient IoT is that the 3GPP-based Ambient IoT systems should be more superior in terms of coverage and functionality, compared to RFID systems.

Physical layer (PHY) security is an advanced method of securing wireless communication by exploiting the unique characteristics of the physical communication medium and incorporating Radio Frequency (RF) fingerprinting. RF fingerprinting makes use of the inherent hardware imperfections of transmitting devices, such as variations in signal frequency, phase noise, or power levels, to uniquely identify devices in the network. Each hardware device has unique components and therefore has a unique fingerprint in the analogue domain.

The imperfections and characteristics can be difficult to detect and therefore it may be challenging to identify the device fingerprint and to subsequently match the fingerprint or detect a mismatch. To address this issue, Al and ML techniques may be used to enable identification of the device fingerprint and to match the fingerprints identified at different times, to determine whether they were obtained from the same device.

By integrating Artificial Intelligence (AI) and Machine Learning (ML), these security techniques may be enhanced through real-time analysis and optimization of channel conditions. AI/ML algorithms can detect anomalies, adapt to changing signal environments, and utilize RF fingerprints to authenticate devices, ensuring that only legitimate users can access the network.

Ambient loT devices typically lack conventional network security measures due to their low-cost user equipment (UEs), making them particularly vulnerable to threats such as spoofing, eavesdropping, and unauthorized access. One reason for this is that Ambient IoT devices typically do not have SIM cards and therefore are unable to use security techniques based on a long-term key stored in the SIM card.

Physical layer security augmented with Al/ML can significantly enhance the security of Ambient IoT devices, which often operate in highly dynamic and resource-constrained environments. By using AI/ML algorithms, the system can monitor real-time channel characteristics and device-specific RF fingerprints to authenticate IoT devices and detect potential threats, even in dense and interference-prone loT networks.

Additionally, AI/ML techniques may be used to enable anomaly detection by identifying unusual patterns in device behaviour or signal propagation, flagging potential security breaches. This adaptive, data-driven security layer is uniquely suited for Ambient loT ecosystems, addressing the inherent vulnerabilities of low-cost Ambient IoT devices and adding a critical security layer.

### AI/ML PHY Security training status report for Ambient IoT

When a new Ambient IoT device joins the network, the unique RF fingerprint for this device is not automatically captured and added to the authorized devices list. In order to obtain the fingerprint, the BS needs to provide instructions to the Ambient loT device. The instructions provide the device with a window of time during which the training will be performed. The instructions also tell the Ambient IoT device when it needs to transmit signals to the base station, so that the base station can accurately train the AI/ML model to determine the fingerprint.

In order to arrange the training window, an AI/ML PHY security training status report is provided to the device. The Ambient loT base station (BS) communicates with the Ambient loT device to specify the time window required for training the Al/ML model at the BS. This report also indicates when the Ambient loT device should transmit signals to the BS or reader. The Ambient loT device receives this status report and transmits signals as instructed. During this process, the Ambient loT BS collects data to train the Al/ML model, then includes the new unique RF fingerprint pattern derived from the trained model in a list of authorised devices.

One advantage of providing a defined training window, in which the base station can receive predetermined signals from the device over an extended period (compared to normal comms), is that a more detailed and accurate fingerprint may be determined. During the training window, a dedicated behaviour model may be trained for each characteristic device, rather than using a pre-trained model to quickly output a fingerprint from a relatively short device transmission (e.g., during normal communications between the device and the base station).

### Initiating AI/ML Physical Layer Security Process for Ambient IoT Devices

Secure implementation of the training phase of AI/ML models for physical layer security described above may pose a significant challenge. Intruders may exploit this critical phase to introduce malicious devices into the system. During training, the AI/ML model learns the unique RF fingerprints, channel characteristics, and behavioural patterns of legitimate devices, which are later used for authentication and anomaly detection. If the training window is not properly secured, intruders can manipulate this process by injecting spoofed signals or compromising the training environment to include their devices as "trusted" entities. This may compromise the integrity of the security system from the outset.

To mitigate this risk, it is proposed to implement strict controls over when and how the training phase is triggered. For instance, secure authentication mechanisms and environmental verification protocols can ensure that the training phase occurs only in trusted and monitored conditions. Additionally, employing robust anomaly detection techniques during and after training can help identify any suspicious additions, maintaining the integrity of the Al/ML model and ensuring reliable physical layer security.

Manually initiating the training phase of Al/ML models for physical layer security offers a practical and secure solution, particularly in private industrial environments where ambient loT devices are deployed. By requiring manual activation, such as pressing a physical button or using a controlled digital interface, the training phase can be initiated only under supervised conditions, ensuring that only legitimate devices are included. This method aligns well with the controlled nature of private manufacturing facilities, where authorized personnel can oversee the addition of new IoT devices to the system. Manual activation prevents unauthorized or accidental triggering of the training process, significantly reducing the risk of intruders exploiting this critical phase. Furthermore, this approach simplifies the integration of new devices in environments where the frequency of updates is manageable, making it a practical and secure measure to maintain the integrity of the network.

In prior art scenarios, new devices may initiate transmission to the base station at any time. The base station may determine the fingerprint during an initial transmission period. However, this can lead to security issues, as noted above (e.g., because an unauthorised device could be added to the security authorised list). Therefore, the proposed method prevents devices from being initiated outside of a specially defined training window.

To prevent unauthorised devices from requesting to join the network repeatedly, until a manual training window is initiated, and then taking the opportunity to register with the base station, the proposed methods further propose procedures for barring unauthorised devices from the network.

When an unauthorised device first communicates via the network (e.g., by sending a request to register to the base station, outside of a training window), the base station will receive the signal, identify that the device is unauthorised (because it has attempted to register outside of the training window) and flag it. The flagged device may be blocked from future attempts to register.

The system may also raise an alarm, to prompt an operator to locate the unauthorised device and remove it from the secure coverage (e.g., where the system is implemented in a secure facility, such as a warehouse).

Whilst registering new devices and determining fingerprints for new devices may only be undertaken during the training window, existing fingerprints may be updated outside of the training window. For example, if device fingerprint matches the stored fingerprint (within predefined matching limits) but the match is starting to deteriorate (e.g., because of changing channel conditions, hardware characteristics changing slightly over time due to components degrading, or changes in performance due to fluctuations in temperature), the base station can ask the device to undertake re-training (and may send new instructions for transmitting signals during a re-training window). This procedure may be performed outside of the manual training window.

Since the Ambient loT devices are low power, they may use energy harvesting techniques to power transmissions. In some examples, devices may use backscattering techniques to communicate with the base station, in which the device reflects ambient radio waves to communicate with the base station. In some cases, the devices may communicate with the base station by reflecting signals received directly from the base station. Where this disclosure refers to a device "transmitting" or "communicating" signals to a base station, this will be understood to include backscattering or reflecting signals.

Although specific embodiments have now been described, the skilled person will understand that various modifications and variations are possible. For example, whilst the disclosure is described in relation to existing network architecture, it will be understood that changes to the architecture (and/or nomenclature) are possible, but the present disclosure may still be applicable in this case. All of the features disclosed herein may be combined in any combination, even if that combination has not been explicitly detailed, except combinations where at least some of such features and/or steps are mutually exclusive. In particular, the preferred features of the invention are applicable to all aspects of the invention and may be used in any combination. Likewise, features described in non-essential combinations may be used separately (not in combination).

A base station (BS) generally refers to a fixed station that performs communication with a UE and/or another BS, and exchanges various kinds of data and control information with the UE and another BS. The BS may be referred to as an advanced base station (ABS), a base transceiver station (BTS), a radio base station, a radio transceiver, a transceiver function, a basic service set (BSS), an extended service set (ESS), an access point (AP), a Node B (NB), an eNode B (eNB), a gNode B (gNB), a transmission and reception point (TRP), a processing server (PS), or some other suitable terminology, depending on the protocol, standard, context or technology. In some examples, a base station may include two or more transceivers that may or may not be collocated. Each transceiver may communicate on the same or different carrier frequency within the same or different frequency band.

Where this disclosure refers to a server or network entity, for instance, this may actually be a pair of servers, or network entities (primary and failover), for redundancy.

Examples of mobile devices include various devices that transmit and receive user data and/or various kinds of control information to and from a base station. The mobile device may be referred to as a user equipment (UE), terminal equipment (TE), a mobile station (MS), a mobile terminal (MT), a user terminal (UT), a subscriber station (SS), a wireless device, a personal digital assistant (PDA), a wireless modem, a handheld device, etc.

Whilst the above methods are described in relation to specific networks in some examples, (such as a 4G/LTE or 5G/NR network), these methods, techniques, apparatuses, and systems may be applied to a variety of wireless multiple access systems. Examples of the multiple access systems include CDMA, FDMA, TDMA, OFDMA, SC-FDMA, and MC-FDMA. CDMA may be embodied through radio technology such as UTRA or CDMA2000. TDMA may be embodied through radio technology such as GSM, GPRS, or EDGE. OFDMA may be embodied through radio technology such as IEEE 802.11 (Wi-Fi), IEEE 802.16 (WiMAX), IEEE 802.20, or E-UTRA. UTRA is a part of a UMTS. 3GPP LTE is a part of E-UMTS using E-UTRA. 3GPP LTE employs OFDMA in DL and SC-FDMA in UL. LTE-A is an evolved version of 3GPP LTE. 3GPP NR employs OFDMA for both downlink and uplink and can operate in both FDD and TDD. For convenience of description, it is assumed that the present invention is applied to 3GPP NR. However, the technical features of the present invention are not limited thereto. For example, although the following detailed description is given based on a mobile communication system corresponding to a 3GPP NR system, aspects of the present invention that are not specific to 3GPP NR are applicable to other mobile communication systems.

A cellular communications system comprises a plurality of cells. A cell refers to a geographical area to which one or more nodes provide a communication service. Accordingly, communicating with a specific cell may mean communicating with an gNB or a node which provides a communication service to the specific cell. Furthermore, channel status/quality of a specific cell refers to channel status/quality of a channel or communication link formed between an gNB or node which provides a communication service to the specific cell and a UE. The UE may measure DL channel state received from a specific node using cell-specific reference signal(s) (CRS(s)) transmitted on a CRS resource and/or channel state information reference signal(s) (CSI-RS(s)) transmitted on a CSI-RS resource, allocated by antenna port(s) of the specific node to the specific node. Meanwhile, a 3GPP system uses the concept of a cell in order to manage radio resources and a cell associated with the radio resources is distinguished from a cell of a geographic region.

The examples may be carried out on any suitable data processing device, such as a personal computer, laptop, mobile telephone, server, virtual machine, and the like. The above description of the systems and methods has been simplified for purposes of discussion and is intended to provide a specific example to illustrate the invention. Different types of systems and methods may be used, as will be appreciated by the skilled person. It will be appreciated that the boundaries between logic blocks are merely illustrative and that alternative embodiments may merge logic blocks or elements or may impose an alternate decomposition of functionality upon various logic blocks or elements.

It will be appreciated that the above-mentioned functionality may be implemented as one or more corresponding modules as hardware and/or software. For example, the above-mentioned functionality may be implemented as one or more software components for execution by a processor of the system. Alternatively, the above-mentioned functionality may be implemented as hardware, such as on one or more FPGAs, and/or one or more ASICs, and/or one or more DSPs, and/or other hardware arrangements. Method steps implemented in flowcharts contained herein, or as described above, may each be implemented by corresponding respective modules. Moreover, multiple method steps implemented in flowcharts contained herein, or as described above, may be implemented together by a single module.

Examples may be implemented by computer software or a "computer program." A storage medium and a transmission medium carrying the computer software are also provided. The computer software may comprise one or more instructions, or code, that, when executed by a computer, causes the methods described to be performed. Computer software may be a sequence of instructions designed for execution on a computer system, and may include a subroutine, a function, a procedure, a module, an object method, an object implementation, an executable application, an applet, a servlet, source code, object code, a shared library, a dynamic linked library, and/or other sequences of instructions designed for execution on a computer system. The storage medium may be a magnetic disc (such as a hard drive or a floppy disc), an optical disc (such as a CD-ROM, a DVD-ROM, or a Blu-ray disc), or a memory (such as a ROM, a RAM, EEPROM, EPROM, Flash memory or a portable/removable memory device), etc. The transmission medium may be a communications signal, a data broadcast, a communications link between two or more computers, etc.

The computer program may be configured to control a network entity and/or mobile device to perform any method according to the disclosure. A network entity of a telecommunications network (e.g., a cellular network) may also be provided, configured to operate in accordance with certain methods disclosed herein. For example, the network entity may include a processor and at least one communication interface, particularly comprising one or both of a transmitter and receiver. A mobile device (e.g., UE) may also be provided, configured to operate in accordance with certain methods disclosed herein. The mobile device may likewise include a processor and at least one communication interface, particularly comprising one or both of a transmitter and receiver.

Each feature disclosed in this specification, unless stated otherwise, may be replaced by alternative features serving the same, equivalent, or similar purpose. Thus, unless stated otherwise, each feature disclosed is one example only of a generic series of equivalent or similar features.

It will be understood that, although the terms "first", "second", etc. may be used herein to describe various elements, these elements should not be limited by these terms. These terms are only used to distinguish one element from another. For example, a first element could be termed a second element, and, similarly, a second element could be termed a first element, without departing from the scope of the present invention. As used herein, the term "and/or" includes any and all combinations of one or more of the associated listed items.

As used herein, including in the claims, unless the context indicates otherwise, singular forms of the terms herein are to be construed as including the plural form and vice versa. For instance, unless the context indicates otherwise, a singular reference herein including in the claims, such as "a" or "an" (such as a mobile device, a network entity, a step, a parameter, or a message) means "one or more" (for instance one or more mobile devices, one or more network entities, one or more steps, one or more parameters, or one or more messages). Throughout the description and claims of this disclosure, the words "comprise", "including", "having" and "contain" and variations of the words, for example "comprising" and "comprises" or similar, mean "including", and are not intended to (and do not) exclude other components.

The use of any and all examples, or exemplary language ("for instance", "such as", "for example" and like language) provided herein, is intended merely to better illustrate the invention, and does not indicate a limitation on the scope of the invention unless otherwise claimed. No language in the specification should be construed as indicating any non-claimed element as essential to the practice of the invention.

Any steps described in this specification may be performed in any order or simultaneously unless stated or the context requires otherwise. Moreover, where a step is described as being performed after a step, this does not preclude intervening steps being performed.

Unless otherwise defined, all terms (including technical and scientific terms) used herein have the same meaning as commonly understood by one of ordinary skill in the art to which this invention belongs. It will be further understood that terms used herein should be interpreted as having a meaning that is consistent with their meaning in the context of this specification and the relevant art and will not be interpreted in an idealized or overly formal sense unless expressly so defined herein.

Like numbers refer to like elements throughout. Thus, the same or similar numbers may be described with reference to other drawings even if they are neither mentioned nor described in the corresponding drawing. Also, elements that are not denoted by reference numbers may be described with reference to other drawings.

A method of manufacturing and/or operating any of the devices disclosed herein is also provided. The method may comprise steps of providing each of the features disclosed and/or configuring or using the respective feature for its stated function.

In the drawings and specification, there have been disclosed typical embodiments of the invention and, although specific terms are employed, they are used in a generic and descriptive sense only and not for purposes of limitation, the scope of the invention being set forth in the following claims.

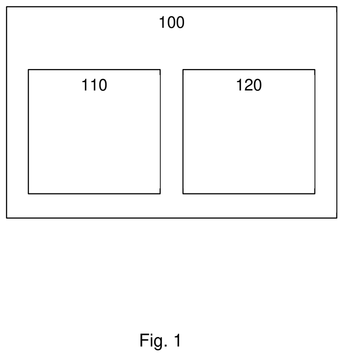

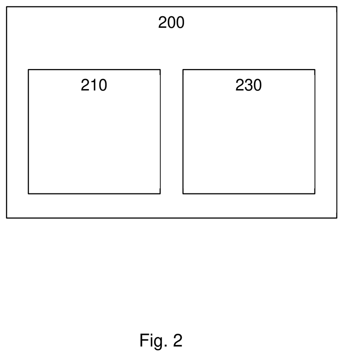

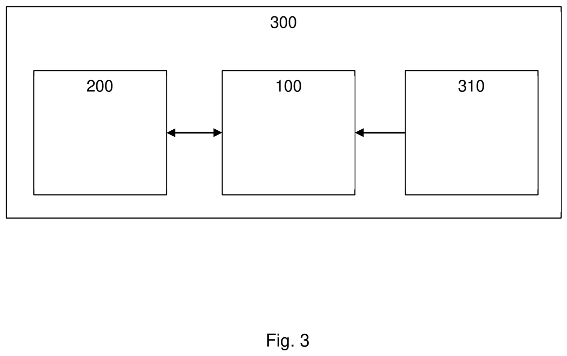

## Claims

1. A method of enabling a base station to determine a wireless transmission fingerprint of an Ambient Internet-of-Things, Ambient loT, device, wherein the method comprises:
communicating, from the Ambient loT device to the base station, a request for the Ambient loT device to register with the base station;
communicating, from the base station to the Ambient loT device, instructions for the Ambient loT device to transmit a wireless communication signal to the base station;
communicating a wireless communication signal from the Ambient loT device to the base station, in accordance with the instructions, wherein the wireless communication signal characterises a wireless transmission fingerprint of the Ambient loT device.

2. The method of claim 1, wherein the instructions comprise radio resource allocation instructions.

3. The method of claim 2, wherein the radio resource allocation instructions comprise one or more of:
timing allocation instructions;
frequency channel allocation instructions; and
spreading sequence allocation instructions.

4. The method of any preceding claim, wherein:
the wireless transmission fingerprint is unique to the Ambient loT device; and/or
the wireless transmission fingerprint depends on electrical characteristics of hardware of the Ambient IoT device and/or characteristics of a wireless communications channel between the Ambient IoT device and the base station; and/or
the wireless communications signal is communicated between the Ambient loT device and the base station via one or more repeaters and/or relays.

5. The method of any preceding claim, wherein:
the Ambient IoT device comprises one or more sensors; and/or
the Ambient IoT device is a passive Ambient IoT device.

6. The method of any preceding claim, further comprising:
determining a wireless transmission fingerprint of the Ambient loT device, based on the wireless communication signal communicated from the Ambient loT device to the base station; and
storing the wireless transmission fingerprint in a list of wireless transmission fingerprints of authorised Ambient IoT devices.

7. The method of any preceding claim, wherein the Ambient loT device is one of a plurality of Ambient loT devices from which a request to register with the base station is received by the base station.

8. The method of claim 7, further comprising:
communicating, from the base station to one or more authorised Ambient loT devices, radio resource allocation instructions for the authorised Ambient loT devices to transmit wireless communication signals to the base station during the window of time, wherein the radio resource allocation instructions sent to the one or more authorised Ambient loT devices cause the one or more authorised Ambient loT devices to communicate with the base station via a limited subset of available radio resources, wherein the limited subset of radio resources excludes radio resources allocated to the plurality of Ambient loT devices.

9. The method of any of claims 1 to 7, further comprising:
communicating, from the base station to one or more authorised Ambient loT devices, instructions for the authorised Ambient IoT devices to cease transmission of wireless communication signals to the base station during the window of time.

10. The method of any preceding claim, wherein determining a wireless transmission fingerprint of the Ambient loT device comprises processing the wireless communication signal using a model.

11. A base station configured to perform the method of any of claims 1 to 4 and 6 to 10.

12. An Ambient loT device configured to perform the method of any of claims 1 to 5.

13. A system configured to perform the method of any of claims 1 to 10, the system comprising:
a base station; and/or
one or more Ambient loT devices.

14. The system of claim 13, further comprising:
a physical interface in a secure location and in communication with the base station via a secure connection, wherein the physical interface is configured to:
send an indication to the base station that one or more authorised Ambient loT devices will request to register with the base station during a window of time,
wherein a start of the window of time is defined by the indication,
wherein the base station is configured to receive requests for the one or more Ambient IoT devices to register with the base station and determine that the requests were received during the window of time.

15. A computer program comprising instructions that, when executed on a processor, cause the processor to perform the method of any of claims 1 to 10.
